# EUROPEAN PATENT SPECIFICATION

(11) **EP 1 485 769 B1**
(45) Date of publication and mention of the grant of the patent: **12.10.2005**
(21) Application number: 03705611.6
(22) Date of filing: 19.02.2003
(51) Int. Cl.: G06F 1/00

(54) **A METHOD AND ARRANGEMENT FOR PROTECTING SOFTWARE**
VERFAHREN UND ANORDNUNG ZUM SCHUTZ VON SOFTWARE
PROCEDE ET DISPOSITIF DE PROTECTION D'UN LOGICIEL

(30) Priority: 19.02.2002 SE 0200484
(43) Date of publication of application: 15.12.2004
(73) Proprietor: Lundholm, Douglas, 156 81 Vallentuna (SE)
(72) Inventor: Lundholm, Douglas, 156 81 Vallentuna (SE)
(74) Representative: Rosenquist, Per Olof
(86) International application number: PCT/SE2003/000276
(87) International publication number: WO 2003/071404

(56) References cited:
- EP-A2- 0 597 599
- EP-A2- 0 852 349
- WO-A1-93/11480
- GB-A- 2 343 025
- US-A- 5 023 907
- US-A- 5 905 860
- US-B2- 6 343 280

## Description

### Technical field

The present invention relates to a method and arrangement for protecting licensed software from illicit use and/or copying.

### Background of the invention

Great quantities of software are available for purchase on the market for installation and use in computers, such as personal computers or a central computer having terminals connected thereto. A piece of software may also be installed in a central server accessible from computers connected to the server over a data network. Such software products are often sold together with a licence giving permission for a predetermined number of users to use the sold software.

A licence may be drawn to be valid for a specific number of users or group of users, which may be identified in beforehand, in order to limit usage of the sold software product. For example, the licence may be valid for a user group having a limited number of persons, such as in a school or a company. In practice, this means that it is permitted to use the software in a limited number of workstations at the same time.

However, it is a problem that a sold software product is often used by further persons not being covered by the licence agreement in force, i.e. illicitly. This is difficult, if not impossible, to supervise after sale and installation without specific aiding means. It is also a problem that many sold programs easily can be copied illegally and installed in plural computers to an uncontrollable extent, resulting in further illicit usage.

Expensive products, such as 3D-processing programs, are often protected against illicit usage by means of so-called hardware locks accompanying a licence in connection with a sold software product. A hardware lock of that kind consists of a lock unit, such as a small box, which is intended for connection to a parallel port of the workstation or computer of a certified user. When a protected program is to be activated, the program requires that the parallel port is first investigated, and if no valid lock is found there, the program cannot be started. In order to start the program, the input of a personal code may also be required which is defined for the lock unit.

However, less costly computer programs, being licensed for a great number of users at plural workstations or computers, do not typically have this kind of locking protection. This is due to the fact that a large quantity of such lock units would be required for a corresponding number of workstations or users, resulting in high costs. Furthermore, only a very limited number of lock units can be connected to one and the same computer, with respect to both compatibility and physical space, in order to enable usage of plural protected programs in the computer. It is a further drawback that, normally, a lock unit of this kind can easily be removed by unauthorised persons, which may be a problem, e.g., in a school.

Without a lock unit, the software is protected merely by a licence agreement between the software producer and the customer using it. Since it is difficult to verify externally the number of users simultaneously using a product in a network, a company may, for example, pay for licences valid for a specific number of users, and then in practice allow more users to utilise the product illicitly. If an inspector from the software producer then visits the company to check the usage, a data administrator at the company may, for example, easily limit the usage only temporarily, and then resume to the greater, illegal, number of users.

Hence, it is a problem to limit the usage of a sold software product to those users or group of users for which a drawn licence agreement is valid.

US5023907 discloses a network licence server daemon which provides access to a computer program based on information stored in user and license databases. When a software program is called from a workstation, it first transmits a signal to the server daemon, which reviews its user database and licence database to determine if access can be granted.

US5905860 discloses a licencing system for licencing applications in a network. The licencing system includes a directory services database which stores all licence information. The directory services database is accessed by providing a request to a licence service provider. The licence service provider generates an executable entity based on the requested parameters, which searches the database and, if the appropriate units are available, assembles a licence. The licence and the application are then transmitted to the requesting client.

EP0597599 discloses a system for establishing licensor changeable limits on shared software usage without the licensor having access to the system on which the shared software is running.

### Summary of the invention

It is an object of the present invention to obtain a solution that prevents illicit use of a software product beyond a licence agreement valid therefor. In particular, the invention is intended to prevent a software product protected by licence from being used by a greater number of users than what is covered by the licence.

It is a further object of the invention to prevent uncontrolled copying of a licensed software product.

This object and others are obtained by providing a method and arrangement where the number of simultaneous users is limited for a software protected by licence, which can be activated at a plurality of network connected workstations. When the software is activated by a workstation, a start request is sent from the software to a network connected lock unit, wherein at least one physical licence unit associated with the protected software is connected to the lock unit and has a limited number of user positions. It is then investigated whether any licence unit, connected to the lock unit and corresponding to the software, has a free user position. The software is started if there is a free user position, but is terminated if there is no free user position.

In order to determine a free licence unit, a unique identity code can be read on each of the licence units being connected to the lock unit, wherein at least one licence unit is identified that corresponds to the software, and it is investigated whether any identified licence unit has a free user position. Next, a list of read identity codes may be sent from the lock unit to the software, and a new list may be created and sent to the lock unit comprising identity codes of identified licence units together with a max number giving a maximum number of permitted users for each identified licence unit. The lock unit can then compare each such max number with the number of user positions currently being occupied for the corresponding licence unit.

The lock unit may be adapted to maintain information on which licence units are connected, and on the number of corresponding user positions currently being occupied in each licence unit.

The software may generate a random number or the like which is sent to the lock unit, wherein the lock unit sends this random number back to the software to indicate that a free user position is found, such that the software can be started.

In order to protect transferred data from eavesdropping, encryption may be used where a public encryption key is sent from the lock unit to the software, the random number is encrypted with a session key generated by the software, the session key is encrypted with the public key, and the random number and the session key are sent as an encrypted message from the software to the lock unit. Thereby, the lock unit can decrypt the session key with a private key corresponding to the public key, and thereafter decrypt the random number with the session key.

If no free user position is found in any licence unit, the lock unit may send an erroneous random number to the software to indicate this fact, such that the software is terminated accordingly.

If use of the software is initiated, the lock unit may register a time for start of the software, such that the occupation duration of the corresponding user position can be checked and limited. The lock unit may further assign a temporary identity code to the workstation which is saved in the lock unit together with the current time for start, in order to keep track on which workstations are active and thereby occupy a user position in a licence unit. Then, the lock unit also sends over the temporary identity code of the workstation to the software.

The software may be adapted to regularly renew its taken user position, by sending a renewal message to the lock unit after a predetermined time interval T, comprising its assigned temporary identity code.

According to another embodiment, the security can be increased by first selecting a licence unit associated with the software having at least one free user position, after which at least one signing code MAC is created, based on at least one parameter known by the software, and sent from the lock unit to the software. Then, the software creates corresponding signing code(s) locally, which is compared with received signing code(s). The software can be started if the received and locally created signing codes coincide with each other, or is terminated if the received and locally created signing codes do not coincide with each other.

The licence unit may be selected by the software from a list l'₁, generated and sent by the lock unit L, comprising unique identity codes for all licence units being connected to the lock unit, and information, for each licence unit, on how many users are currently active and occupies a user position in the licence unit.

Said signing code(s) MAC may be sent to the software together with a session code SID assigned to the communication with the software, a created timestamp TM identifying the clock time when the communication with the software took place, and a current number of active users AA.

Said signing code(s) MAC may be created based on at least one of the following parameters: a readable identity code AID of the selected licence unit, a concealed identity code DAID of the licence unit, a readable identity code LID of the lock unit, a concealed identity code DLID of the lock unit, a functional code PLID of the function of the lock unit, a random number st₁ generated and sent by the software, the session code SID, the timestamp TM and the current number of users AA.

The relationship between the AID code and the DAID code can be determined in advance in the software, such that the DAID code can be derived from the AID code. Further, the relationship between the LID code and the DLID code may be determined in advance in the software, such that the DLID code can be derived from the LID code.

Said signing code(s) MAC may comprise a first signing code MAC₁ and a second signing code MAC₂, wherein: MAC₁ is based on at least one of st₁, SID, AID, AA, TM, LID, DLID and PLID; and MAC₂ is based on at least one of st₁, SID, TM, AA, AID and DAID.

The software may be adapted to frequently renew its taken user position by sending a renewal message after a predetermined time interval T to the lock unit, comprising its assigned session code SID and a new generated random number st₂. Thereby, the lock unit can identify the workstation using the software, the used licence unit and the latest saved timestamp TM, and determine whether a continued usage should be allowed.

A new timestamp TM' may be created corresponding to the current point of time, and a third signing code MAC₃ may be created and sent from the lock unit to the software, where MAC₃ is based on at least one of st₂, SID, TM, TM', AID and DAID.

### Brief description of the drawings

The present invention is described in more detail below with reference to the accompanying drawings:
- Fig. 1 is a schematic block diagram of a data network, according to one embodiment.
- Fig. 2 is a schematic signalling diagram between a computer program and a lock unit, according to another embodiment.
- Fig. 3 is a schematic block diagram of a data network, according to another embodiment.
- Fig. 4 is a schematic signalling diagram between a computer program and a lock unit, according to another embodiment.

### Detailed description of preferred embodiments

The present invention is network-based, which means that a software product protected by a licence agreement can be used in workstations or computers connected over a network to a specific central lock unit, such as over a local network, intranet or the Internet. This makes the solution particularly attractive, since licence-protected software is sold to companies and schools normally having personal computers connected together in a network.

In the following, the phrase "workstation" is used to cover all types of terminals, stations or personal computers from which a user can communicate over a network and activate the protected software. The protected software may be a computer program of any type which is installed centrally in a computer or server accessible from the workstations, or locally in each of the workstations.

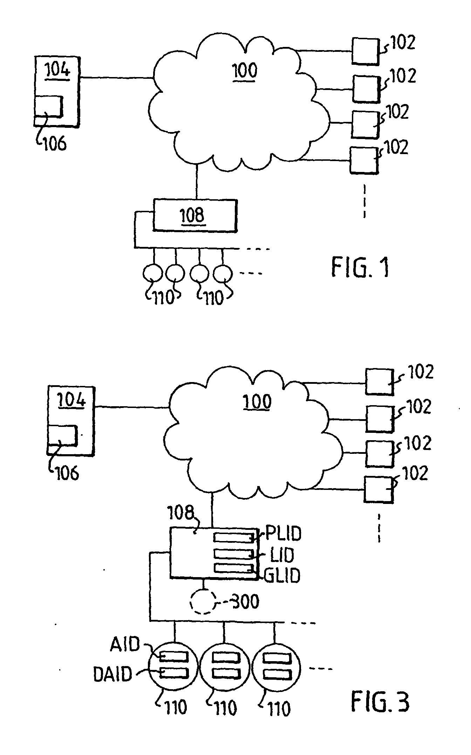

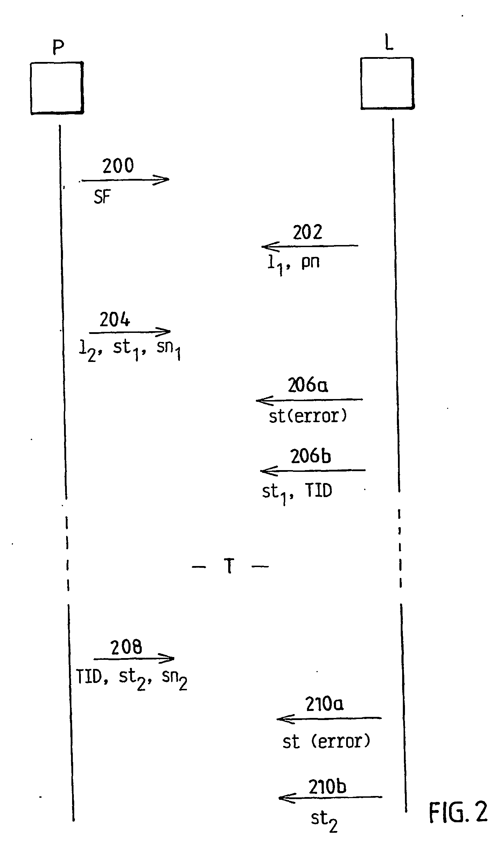

In Fig. 1, a data network 100 is shown to which a plurality of workstations 102 are connected. Also shown in the figure is a server 104 connected to the data network 100, in which a protected software 106, such as a computer program, is installed. The software 106 is accessible and can be activated from a number of workstations 102, and is protected by a licence agreement being valid for a limited and predetermined number of users. As mentioned above, the protected software 106 can alternatively be installed locally in the workstations 102, not shown.

A central lock unit 108 is also connected to the data network 100, which can be utilised to control usage and limit the number of simultaneous users of the protected software 106, in accordance with the licence agreement. The lock unit 108 may in practice comprise a programmable computer with a network connection. In order to control the number of users, the lock unit 108 is provided with any number of detachable physical licence units 110, each of which enables usage of the protected software 106 from a predetermined number of workstations 102, which is described in more detail below. Thus, the number of licence units 110 being connected to the lock unit corresponds to the number of workstations covered by the licence agreement.

Each licence unit 110 is a small and very simple physical unit containing a readable unique identity code, or agreement identity AID, such a serial number or the like, which may be burnt on a card, chip or the like. Thus, the unique identity code is associated with the software 106 and its licence agreement, permitting usage of the software at one or more workstations 102, which is determined in advance in accordance with the licence agreement.

The basic hardware for the lock unit 108 may, for example, consist of a product already known on the market called "TINI" (Tiny Internet Interface), which is produced by the company Dallas Semiconductors. Further, the licence units 110 may, for example, consist of small electronic buttons, so-called "iButtons", produced by the same company, each containing a laser burnt unique serial number. Today, these buttons are often used as electronic keys for doors or the like. However, the present invention is not limited to any particular design of the lock unit 108 and/or licence units 110, which are therefore not described any further.

Briefly, the inventive lock arrangement operates in the following manner. The lock unit 108 has been programmed in advance, e.g. in connection with installation of the software 106, in order to maintain a list of the workstations 102 currently using the software 106, and to register corresponding licence units 110 as being "occupied" during the period of usage. Each licence unit 110 may embrace one or more user sites, depending on how the licence agreement is constructed. Each licence unit 110 may further be valid for certain specified workstations 102 or for a specific number of unspecified workstations 102. A licence unit 110 of this kind may also be used for plural programs protected by agreements. The protected software 106 is adapted to first perform a check routine together with the lock unit 108, according to the following, before becoming available for use.

When a user first activates the protected software 106 from a workstation 102, the software 106 sends a start request to the lock unit 108. It is then investigated whether any licence unit 110 corresponding to the software 106 is connected to the lock unit 108 and has a free user position, or whether all user positions are currently occupied by other workstations. If there is a free user position at any licence unit 110 for the software 106, the software 106 can be started for use at the workstation 102. However, if that or those licence units 110 associated with the software have been registered as occupied, or if no licence unit associated with the software is found, the software 106 terminates itself.

Thus, in order to start and use the software 106 being protected by this arrangement, a lock unit 108 must be available in the data network 100 containing a specific computer program adapted to interact in said control routine. It is required for the present software 106 that a licence is associated with a connected licence unit 110 and its unique identity code. For example, a company may purchase and connect licence units 110 for the number of licences desired to obtain access to a software product. A licence unit 110 of this kind may then correspond to one or more licence agreements, where each agreement embraces one or more users or workstations, such that the number of connected licence units can be reduced. It is also possible to add upon demand further licences for a protected software, if required, by connecting further licence units 110 to the lock unit 108. However, this may in certain cases require that the protected software be updated with the added licence units 110. It is also possible to reduce the number of licence units 110 in a corresponding manner.

Furthermore, the software producer may protect its product by checking the licence units 110 over the data network 100 by means of the lock unit 108, in order to verify that at least one licence unit 110 associated with the product is connected thereto. The lock unit 108 is programmed such that only the permitted number of users can use the product simultaneously by means of the maintained list of the workstations currently using the software 106, and thereby occupying user positions in the present licence units 110. In this way, only the number of users being paid for by the company can use a product simultaneously. If no licence unit 110 having a free user position is found, the software 106 terminates itself.

Data being sent between a workstation 102 and the lock unit 108 during the control routine, may preferably also be protected by means of encryption, which is further described below. For this purpose, encryption methods may be used with both session keys and public/private keys.

Session keys are randomly selected numbers of a specific length which are only used for one session, such as for transfer of data, and need to be known by both sender and receiver. An advantage with such keys is that the encryption of data can be performed relatively fast. The key being sent over to the receiver to enable decryption of the message, must itself be encrypted to inhibit interception by anyone on its way, thereby enabling reading the complete message. For this purpose, a public key may be used together with a private key, which is kept secret. In order to encrypt the session key, the public key is used by the sender, while the private key is used by the receiver for decryption. Thus, the session key encrypts the actual message, while the public key encrypts the session key, thereby making the message unreadable for everyone, except the receiver having the private key.

With reference to Fig. 2, a more detailed example is described below of how the present invention can be used, according to a first embodiment. Fig. 2 illustrates a signalling diagram between a protected computer program P and a central network connected lock unit L. In practice, the computer program P may be any software protected by a licence agreement. For simplicity, it is assumed that the program P is locally installed in a likewise network connected workstation, such that signals are transmitted physically between the workstation and the lock unit L over a common data network. However, the program P may alternatively be installed centrally in a server accessible for workstations, as illustrated in Fig. 1.

The program P contains information on which licence units are associated therewith, as well as on the number of corresponding user positions. In turn, the lock unit maintains information on which licence units are connected, and on the number of corresponding user positions currently being occupied in each licence unit.

When the program P is activated by the workstation, a start request SF is sent to a lock unit L specified during installation of the program, in a first step 200. There may be a plurality of such lock units connected to the data network, which are identified by means of network addresses. In response to the start request, the lock unit L reads a unique identity code, such as a serial number, on each of the licence units being connected to the lock unit, and generates a list l₁ of these identity codes. Thus, each lock unit may contain licence units associated with a plurality of protected computer programs. One and the same licence unit may further contain user positions for plural computer programs.

The lock unit is further programmed to generate new pairs of keys for public encryption. This generation of keys is time consuming and proceeds preferably continuously in the background, since high random prime numbers must be generated in order to create a secure pair of keys. The required calculations may take several hours to perform, depending on the processor in the lock unit. Once a new key has been generated, it can be used to keep transmitted information secret, at least for a period of time, before any eavesdropper manage to crack the private key from the public one.

In a next step 202, the list l₁ of all connected licence units is sent together with the latest generated public key pn, from the lock unit L to the computer program P. Since only the lock unit L has the corresponding private key, the data encrypted with the public key pn can only be decrypted by the lock unit L.

Next, the program P identifies those licence units in the list l₁ being associated therewith. From these, the program P creates a new list l₂ containing identities of the associated licence units together with a max number indicating the maximum number of permitted users for each licence unit. If no such associated licence unit is found in the list l₁, the protected program P is adapted to be terminated automatically at the workstation.

When the new list l₂ has been created, the program P further generates a session key sn₁ and a specific random number st₁ or the like, intended to be used later to confirm that the program is allowed to be started, which is described below.

The list l₂ and the random number st₁ are encrypted with the session key sn₁, e.g. according to an algorithm called TEA (Tiny Encryption Algorithm). Thereafter, the session key sn₁ is in turn encrypted with the public key pn, e.g. according to an algorithm called RSA (Rivest, Shamir, Adleman). The list l₂, the random number st₁ and the session key sn₁ are then sent as an encrypted message from the program P back to the lock unit in the next step 204, wherein the lock unit L can decrypt the session key sn₁ with its private key, and then the remaining message with the session key sn₁.

By means of the decrypted list l₂ of the licence units associated to the program and their max numbers, the lock unit L investigates whether it has any connected licence unit currently being filled with a user quantity lower than the max number given by the program P as the maximum allowed for this licence unit. The lock unit then compares each such max number with the number of user positions currently being occupied for the corresponding licence unit. If no such licence unit with a free user position is found, the lock unit L is programmed to send back, in an alternative step 206a, an erroneous random number st(error) to the program P, which is then terminated automatically. However, if a licence unit having at least one free user position is connected, The present workstation is added to an active list for that licence unit, such that the lock unit knows that a user position is now occupied.

The lock unit L further registers a time for start, such that the occupation duration of the corresponding user position can be checked and limited. The user position can then be released automatically after a certain period of time, or remain as the workstation renews its usage at frequent intervals, which is described in more detail below. Next, the correct decrypted random number st₁ is sent, in an alternative step 206b, to the program P, which thereby can be started for use in the workstation.

In order to keep track on which workstations are active, and thereby occupy a user position in a licence unit, the lock unit L may preferably also assign a temporary identity code, TID, to the workstation, which is saved in the lock unit L together with the session key sn₁ of the workstation and the current time of start. The TID code is also sent over to the program P in step 206b, where the TID code is encrypted with the session key sn₁, such that only the lock unit L and the program P can read the TID code.

The program P may then renew its taken user position, such that the lock unit is updated on whether it is still used. Thus, after a predetermined time interval T, e.g. one minute, the program P sends a renewal message to the lock unit L in a step 208, containing its assigned TID code, e.g. in a decrypted format, as well as a new random number st₂ and a new created session key sn₂, both encrypted with the previous session key sn₁. This change of keys provides for keeping the keys secret for a longer period of time. Even if anyone unauthorised manages to crack the public key, and thus retrieves the first session key, it is further required that each such change of keys has been intercepted in order to reveal the latest valid session key, which is very unlikely.

By means of the received TID code, the lock unit L can identify the workstation using the program P as well as the corresponding previous session key sn₁, both of which are stored after step 204, wherein the new session key sn₂ and random number st₂ can be decrypted by means of the previous session key sn₁. Alternatively, the random number st₂ may be encrypted with the new session key sn₂. A new time of start is registered and the new session key sn₂ is saved. Similar to the alternative steps 206a,b, the correct or erroneous random number is sent back to the program P in alternative steps 210a or 210b, depending on whether the TID code given in step 208 is found in the lock unit L. The program P remains active if the correct random number st₂ is received, alternative step 210b, and is terminated automatically if the erroneous random number st(error) is received, alternative step 210a. The program P may also be adapted to terminate automatically if no random number or reply is received within a specific time limit.

Steps 208 and 210b may thus be repeated at specific time intervals to enable continued usage of the program P. In order to further increase security, a new TID code may be created by the lock unit L each time the program P sends a renewal, and be sent over to the program P in step 210b, not shown.

It is also possible to modify the procedure described in Fig. 2, such that the lock unit L itself investigates whether any licence unit associated to the program P is found having a free user position. For this, it is required that the program P is identified, and that the lock unit L registers both which programs each licence unit is valid for, and the maximum number allowed corresponding user positions. Thereby, the sending of lists l₁ and l₂, respectively, can be omitted in steps 202 and 204. In order to obtain good security, the identity of the program P should then be sent in an encrypted form.

Instead of, or as a complement to, using encryption of messages being sent between the program P and the lock unit L, as described above, a signing procedure can be used, according to an alternative embodiment. Fig. 3 illustrates an alternative embodiment of the lock unit 108 and its connected licence units 110, accordingly. Otherwise, the same reference numbers as in Fig. 1 have been used for corresponding elements in Fig. 3. In this embodiment, the licence units 110 are provided with means for processing data and for sending data to the lock unit 108, e.g. in the form of a chip comprising a microcomputer and a communication unit. Furthermore, each licence unit 110 is provided with both an identity code AID for the corresponding licence agreement, which is readable from the outside, and also a concealed identity code DAID which cannot be read from the outside, but only be overwritten by a new code if the original code should be lost. The relationship between the AID code and the DAID code is defined in advance in the program P, such that it can derive the DAID code from the AID code, e.g. by means of an algorithm or a table.

Likewise, the lock unit 108 may be provided with a readable identity code LID, as well as a concealed identity code DLID, and possibly a further functional code PLID uniquely identifying the function of the lock unit, and which preferably can be derived from the programmed program or software code of the lock unit. For example, the codes LID, DLID and PLID may be stored in an internal memory in the lock unit 108, or stored in a separate identity unit 300 connected to the lock unit 108, as indicated with dashed lines in Fig. 3, which may be of the same type as the licence units 110. These codes AID, DAID, LID, DLID and PLID can in this embodiment be used in a signing procedure, in order to protect the licence units 110 and the lock unit 108 from being faked, and to protect transmitted messages, according to the following.

Each licence unit 110 is able to create a signing code called MAC (Message Authentication Code) by means of provided data, including its concealed code DAID. This code cannot be reversed, i.e. it is impossible to find out the concealed identity code by means of such a code.

In addition to the DAID code, a MAC code may include any information, likewise irreversible, which is sent over from the lock unit in connection with a request for creating a MAC code.

Since the program P can create the DAID code by means of the AID code, the program P can similarly create a local MAC* code. By comparing a local MAC* and the MAC that has been created by the licence unit 110 and then sent via the lock unit 108 to the program P, it can be determined whether the licence unit is authentic or not. If the lock unit further embeds data in the MAC code which is sent over to the program P, this may also determine whether the sent data is authentic or not.

A similar signalling procedure can also be used to ensure the authenticity of the lock unit 108, by utilising its LID code and DLID code, and optionally also PLID code. The relationship between the LID code and the DLID code, and possibly also the PLID code, is likewise defined in advance in the program P, such that these codes can be derived correspondingly. Thus, the identity of the lock unit can also be signed, together with information saved in the lock unit, in the form of a MAC code which is sent over to the program P and is checked in a way similar as for the licence unit 110.

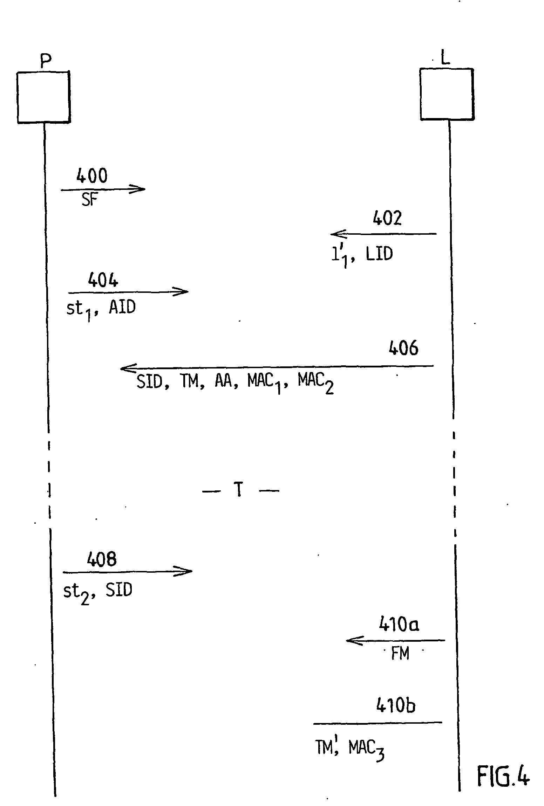

With reference to Fig. 4, it is described below how the present invention can be used, according to another preferred embodiment. Similar to Fig. 2, Fig. 4 illustrates a signalling diagram between a protected program P and a lock unit L. Of course, here, the program P may also be locally installed in a workstation or centrally in a server. The program P contains information on which licence units are associated therewith, as well as on the number of corresponding user positions. The lock unit L in turn maintains information on which licence units are connected, as well as on the number of corresponding user positions currently being occupied in each licence unit.

When the program P is activated in the workstation, a start request SF is sent to the lock unit L, in a first step 400. In response to the start request, the lock unit L generates a list l'₁ of unique identity codes, in this case AID codes, for all licence units being connected to the lock unit L. In this embodiment, the list l'₁ also includes, for each licence unit, information on how many users are currently active, thereby occupying a user position in the licence unit.

In a next step 402, The list l'₁ is sent together with the LID code from the lock unit L to the program P, which then identifies the licence units in the list l'₁ which are associated with this program. Next, the program P selects a licence unit associated with the program still having at least one free user position, i.e. having a current number of active users AA less than its maximum permitted number AAmax. If more than one such licence unit having a free position is found in the list l'₁, one of them can be selected arbitrarily. However, if no such associated licence unit with a free position is found, the protected program P is adapted to be terminated automatically in the workstation.

When the program P has selected a license unit with an adherent AID code, it further generates a first random number st₁, intended for use when creating unique signing codes, which is described below.

The AID code of the selected licence unit and the random number st₁ are then sent from the program P to the lock unit L, in a next step 404. Next, the lock unit L creates a session code SID identifying the communication with the program P, as well as a timestamp TM identifying the clock time this communication took place. Further, the lock unit L maintains an active list of SID codes for connected licence units. The present SID code is thus added to the active list for the selected licence unit with the adherent AID code, where the SID code and the timestamp TM are saved, resulting in that the number of users AA of the present licence unit is increased by one.

Next, the lock unit L will verify this communication as well as the authenticity of the lock unit by means of a signing procedure, when a pair of signing codes MAC₁ and MAC₂ is created. Thus, a first signing code MAC₁ is created by the lock unit, which is based on at least one of the following parameters: the received random number st₁, the session code SID, the AID code of the licence unit, the current number of users AA, the created timestamp TM, as well as the identification codes of the lock unit LID, DLID and PLID. In a practical implementation, the MAC₁ code may be created in a separate identity unit 300 connected to the lock unit L, if such is used, or internally in the lock unit.

Correspondingly, a second signing code MAC₂ is also created by the licence unit, based on at least one of the following parameters: the random number st₁, the session code SID, the timestamp TM, the number of users AA, as well as the identification codes of the lock unit itself AID, and DAID. MAC₁ and MAC₂ can be created by means of predefined algorithms where one or more of the above-mentioned parameters are included. Preferably, all of the parameters listed above are used to provide maximum security, although fewer parameters may be sufficient in certain applications. Thus, the following applies to the preferred case:
MAC₁ = (st₁, SID, AID, AA, TM, LID, DLID, PLID)
MAC₂ = (st₁, SID, TM, AA, AID, DAID)

Again referring to Fig. 4, the two signing codes MAC₁ and MAC₂, as well as the SID code, the timestamp TM and the number of users AA, are sent in a next step 406 to the program P. When this information has been received, the program P creates corresponding signing codes MAC_{1*} and MAC_{2*} locally, in the same manner as in the licence unit and the identity unit. This is possible, since SID, TM and AA have been received in plain language, AID, LID and PLID are already stored in the program, and DAID and DLID can be derived from AID and LID, respectively. Furthermore, the random number st₁ generated by the program is included, thereby making the signing codes unique for this communication.

The signing codes MAC_{1*} and MAC_{2*} created locally by the program P are then compared with the received signing codes MAC₁ and MAC₂, respectively, wherein the program is terminated automatically if they do not coincide with each other. On the other hand, if the locally created signing codes coincide with the received ones, the program P can be started and used. Furthermore, the now signed, and thereby positively authentic, present number of users AA can be compared with the maximum number of users for the agreement, AAmax, identified by the code AID. The number of users AA also includes the newly added user, further resulting in termination of the program if AA is greater than AAmax. Otherwise, the program P can be started for use in the workstation.

The lock unit L further registers a time for start of program usage, as in the previous embodiment, e.g. by using the timestamp TM, such that the occupation duration of the corresponding user position can be checked and limited.

Also in this embodiment, the program can frequently renew its taken user position on the licence unit, such that the lock unit L is updated on the continued use thereof. Thus, after a predetermined time interval T, the program P sends a renewal message to the lock unit L in a step 408, containing its assigned session code SID and a new generated random number st₂. By means of the received SID code, the lock unit L can then identify the workstation using the program P, as well as the present AID code and the latest saved timestamp TM, in order to determine whether a continued usage should be permitted.

Thereafter, the lock unit L creates a new timestamp TM' corresponding to the present point of time, which is saved in the list of users, such that the previous timestamp TM is replaced with the new timestamp TM'. In order to sign this communication, and to guarantee that the used licence unit is still connected to the lock unit L, a third signing code MAC₃ is created in the licence unit L, based on at least one, preferably all, of the following parameters: the received random number st₂, the SID code, the previous timestamp TM, the new timestamp TM', as well as the AID code and the DAID code for the present licence unit. Thus, the following applies to the preferred case:
MAC₃ = (st₂, SID, TM, TM', AID, DAID)

However, if the lock unit L does not find the session number SID in the list of users, or discovers that the licence unit corresponding to the AID code is no longer connected, an error message FM is sent back to the program P, in an alternative step 410a. In response to the error message FM, the program may select whether it should be terminated automatically, or attempt to occupy a new user position by repeating the procedure, from step 404 if the same AID can be used, or from step 400 if a new AID is required. Otherwise, the signing code MAC₃ and the timestamp TM' are sent to the program P, in the alternative step 410b, which then can remain active in the workstation. Furthermore, the program P may be adapted to create a corresponding signing code MAC_{3*} and compare it with the received signing code MAC₃, in a similar way as for MAC₁ and MAC₂, in order to determine whether the program P should remain active or be terminated automatically. However, in a simpler embodiment, it is sufficient that the lock unit L sends a message in step 410b approving continued usage.

The program P may also in this embodiment be adapted to be terminated automatically if no reply is received from the lock unit L within a specific time period after sending the renewal message in step 408.

Steps 408 and 410 may also be repeated at specific time intervals for continued use of the program P. In order to further increase security, a new SID code may be created by the lock unit L each time the program P sends a renewal request, and be sent over to the program P in step 410b, not shown. Further, both the new SID code and the previous one may be included as parameters in the third signing code MAC₃ created by the licence unit L.

The present invention provides benefits to users of protected software, by means of increased control and security, a centralised administration and supervision, free parallel ports, as well as a simple upgrading of licences and of the number of licences. An obvious benefit for the software producer is the potentially higher licence revenues, since the number of simultaneous users cannot exceed the licence agreement the customer has paid for. Furthermore, the equipment required is relatively inexpensive and simple to handle.

Naturally, various modifications and combinations of the embodiments described above are possible within the scope of the invention. For example, the steps described in Fig. 2 and 4 can be varied depending on which level of security is desired/suitable. The conception of "random number" used above may of course be varied such that one or more optional characters, such as digits and/or letters, can be used.

## Claims

1. A method of limiting the number of simultaneous users of a software (106) protected by a licence agreement, wherein the software (106) can be activated by a plurality of network connected workstations (102), **characterised by** the following steps:
A) sending a start request from the software to a network connected central lock unit (108) as the software is activated by a workstation, wherein at least one physical licence unit (110), associated with the protected software (106) and containing a readable unique identity code, is connected to the lock unit (108) and has a limited number of user positions which can be occupied by users of the software (106),
B) investigating whether any licence unit (110), connected to the lock unit (108) and associated with the software (106), has any free user position,
C) starting the software (106) for usage in said workstation (102) if a free user position is found in step B), and
D) terminating the software (106) if no free user position is found in step B).

2. A method according to claim 1, **characterised in that** step B) comprises the following substeps:
E) reading the unique identity code on each of the licence units being connected to the lock unit,
F) identifying at least one licence unit that corresponds to the software, and
G) investigating whether any licence unit identified in step F) has a free user position.

3. A method according to claim 2, **characterised in that** a list of identity codes read in step E) is sent from the lock unit to the software, a new list is created and sent to the lock unit comprising identity codes of licence units identified in step F) together with a max number giving a maximum number of permitted users for each identified licence unit, and the lock unit compares each such max number with the number of user positions currently being occupied for the corresponding licence unit.

4. A method according to claim 3, **characterised in that** the lock unit maintains information on which licence units are connected, and on the number of corresponding user positions currently being occupied in each licence unit.

5. A method according to any of claims 1 - 4, **characterised in that** the software generates a random number or the like which is sent to the lock unit, wherein the lock unit sends this random number back to the software to indicate that a free user position is found in step B), such that the software can be started in step C).

6. A method according to claim 5, **characterised in that** a public encryption key is sent from the lock unit to the software, the random number is encrypted with a session key generated by the software, the session key is encrypted with the public key, and the random number and the session key are sent as an encrypted message from the software to the lock unit, such that the lock unit can decrypt the session key with a private key corresponding to the public key,. and thereafter the random number with the session key.

7. A method according to any of claims 1 - 6, **characterised in that**, if no free user position is found in step B), the lock unit sends an erroneous random number to the software to indicate this fact, such that the software is terminated in step D).

8. A method according to any of claims 1 - 7, **characterised in that** the lock unit registers a time for start of the software in step C), such that the occupation duration of the corresponding user position can be checked and limited.

9. A method according to claim 8, **characterised in that** the lock unit assigns a temporary identity code to the workstation which is saved in the lock unit together with the current time for start, in order to keep track on which workstations are active and thereby occupy a user position in a licence unit, wherein the lock unit also sends over the temporary identity code of the workstation to the software.

10. A method according to claim 9, **characterised in that** the software is adapted to regularly renew its taken user position, by sending a renewal message to the lock unit after a predetermined time interval T, comprising its assigned temporary identity code.

11. A method according to any of claims 1 - 10, **characterised in that** a licence unit associated with the software is selected having at least one free user position, at least one signing code MAC is created, based on at least one parameter known by the software, and sent from the lock unit to the software, the software creates corresponding signing code(s) locally, which is compared with received signing code(s), wherein the software is started if the received and locally created signing codes coincide with each other, or terminated if the received and locally created signing codes do not coincide with each other.

12. A method according to claim 11, **characterised in that** the licence unit is selected by the software from a list l'₁, generated and sent by the lock unit L, comprising unique identity codes for all licence units being connected to the lock unit, and information, for each licence unit, on how many users are currently active and thereby occupies a user position in the licence unit.

13. A method according to claim 11 or 12, **characterised in that** said signing code(s) MAC is sent to the software together with a session code SID assigned to the communication with the software, a created timestamp TM identifying the clock time when the communication with the software took place, and a current number of active users AA.

14. A method according to claim 13, **characterised in that** said signing code(s) MAC is created based on at least one of the following parameters: a readable identity code AID of the selected licence unit, a concealed identity code DAID of the licence unit, a readable identity code LID of the lock unit, a concealed identity code DLID of the lock unit, a functional code PLID of the function of the lock unit, a random number st₁ generated and sent by the software, the session code SID, the timestamp TM and the current number of users AA.

15. A method according to claim 14, **characterised in that** the relationship between the AID code and the DAID code is determined in advance in the software, such that the DAID code can be derived from the AID code, and that the relationship between the LID code and the DLID code is determined in advance in the software, such that the DLID code can be derived from the LID code.

16. A method according to claim 14 or 15, **characterised in that** said signing code(s) MAC comprises a first signing code MAC₁ and a second signing code MAC₂, wherein: MAC₁ is based on at least one of st₁, SID, AID, AA, TM, LID, DLID and PLID; and MAC₂ is based on at least one of st₁, SID, TM, AA, AID and DAID.

17. A method according to claim 16, **characterised in that** the software is adapted to frequently renew its taken user position by sending a renewal message after a predetermined time interval T to the lock unit, comprising its assigned session code SID and a new generated random number st₂, such that the lock unit can identify the workstation using the software, the used licence unit and the latest saved timestamp TM, and determine whether a continued usage should be allowed.

18. A method according to claim 17, **characterised in that** a new timestamp TM' is created corresponding to the current point of time, and that a third signing code MAC₃ is created and sent from the lock unit to the software, where MAC₃ is based on at least one of st₂, SID, TM, TM', AID and DAID.

19. An arrangement for limiting the number of simultaneous users of a software (106) protected by a licence agreement, wherein the software (106) can be activated by a plurality of network connected workstations (102), **characterised by:**
- a network connected central lock (108) unit to which an optional number of physical licence units (110) can be connected, wherein each licence unit (110) has a limited number of user positions, is provided with a unique identity code, and is associated with at least one licence agreement,
- a software (106) adapted to send a start request to the lock unit (108) when the software is activated by a workstation (102)
- means for investigating whether any licence unit (110) connected to the lock unit (108) and corresponding to the software has any free user position,
- means for starting the software (106) for usage in said workstation if there is a free user position, and
- means for terminating the software (106) if there is no free user position.

20. An arrangement according to claim 19, **characterised in that** the lock unit is adapted to maintain information on which licence units are connected, and on the number of corresponding user positions currently being occupied in each licence unit.

## Patentansprüche

1. Verfahren zum Beschränken der Anzahl gleichzeitiger Benutzer einer Software (106), die durch eine Lizenzvereinbarung geschützt ist, wobei die Software (106) durch eine Vielzahl mit einem Netzwerk verbundener Workstations (102) aktiviert werden kann, **gekennzeichnet durch** die folgende Schritte:
A) Senden einer Start-Anforderung von der Software zu einer mit dem Netzwerk verbundenen zentralen Sperreinheit (108), wenn die Software **durch** eine Workstation aktiviert wird, wobei wenigstens eine physikalische Lizenzeinheit (110), die mit der geschützten Software (106) zusammenhängt und einen lesbaren einzigartigen Identitätscode enthält, mit der Sperreinheit (108) verbunden ist und eine beschränkte Anzahl von Benutzerpositionen aufweist, die von Benutzern der Software (106) belegt werden können,
B) Ermitteln, ob eine Lizenzeinheit (110), die mit der Sperreinheit verbunden ist und mit der Software (106) zusammenhängt, eine freie Benutzerposition hat,
C) Starten der Software (106) zur Benutzung in der Workstation (102), wenn in Schritt B) eine freie Benutzerposition gefunden wird, und
D) Beenden der Software (106), wenn in Schritt B) keine freie Benutzerposition gefunden wird.

2. Verfahren nach Anspruch 1, **dadurch gekennzeichnet, dass** Schritt B) die folgenden Teilschritte umfasst:
E) Lesen des einzigartigen Identitätscodes an jeder der Lizenzeinheiten, die mit der Sperreinheit verbunden sind,
F) Identifizieren wenigstens einer der Lizenzeinheiten, die der Software entspricht, und
G) Ermitteln, ob eine in Schritt F) identifizierte Lizenzeinheit eine freie Benutzerposition hat.

3. Verfahren nach Anspruch 2, **dadurch gekennzeichnet, dass** die Liste in Schritt E) gelesener Identitätscodes von der Sperreinheit zu der Software gesendet wird, einen neue Liste erzeugt und zu der Sperreinheit gesendet wird, die Identitätscodes in Schritt F) identifizierte Lizenzeinheiten zusammen mit einer Max-Anzahl umfasst, die eine maximale Anzahl zulässiger Benutzer für jede identifizierte Lizenzeinheit angibt, und die Sperreinheit jede derartige Max-Nummer mit der Anzahl von Benutzerpositionen vergleicht, die aktuell für die entsprechende Lizenzeinheit belegt sind.

4. Verfahren nach Anspruch 3, **dadurch gekennzeichnet, dass** die Sperreinheit Informationen darüber, welche Lizenzeinheiten verbunden sind, sowie über die Anzahl entsprechender Benutzerpositionen führt, die aktuell in jeder Lizenzeinheit belegt sind.

5. Verfahren nach einem der Ansprüche 1 - 4, **dadurch gekennzeichnet, dass** Software eine Zufallszahl oder dergleichen erzeugt, die zu der Sperreinheit gesendet wird, wobei die Sperreinheit diese Zufallszahl zu der Software zurücksendet, um anzuzeigen, dass in Schritt B) eine freie Benutzerposition gefunden worden ist, so dass die Software in Schritt C) gestartet werden kann.

6. Verfahren nach Anspruch 5, **dadurch gekennzeichnet, dass** ein öffentlicher Verschlüsselungsschlüssel von der Sperreinheit zu der Software gesendet wird, die Zufallszahl mit einem Sitzungsschlüssel verschlüsselt wird, der von der Software erzeugt wird, der Sitzungsschlüssel mit dem öffentlichen Schlüssel verschlüsselt wird und die Zufallszahl sowie der Verschlüsselungsschlüssel als eine verschlüsselte Nachricht von der Software zu der Sperreinheit gesendet werden, so dass die Sperreinheit den Sitzungsschlüssel mit einem privaten Schlüssel, der dem öffentlichen Schlüssel entspricht, und anschließend die Zufallszahl mit dem Sitzungsschlüssel entschlüsseln kann.

7. Verfahren nach einem der Ansprüche 1 - 6, **dadurch gekennzeichnet, dass** wenn in Schritt B) keine freie Benutzerposition gefunden wird, die Sperreinheit eine fehlerhafte Zufallzahl zu der Software sendet, um diese Tatsache anzuzeigen, so dass die Software in Schritt D) beendet wird.

8. Verfahren nach einem der Ansprüche 1 - 7, **dadurch gekennzeichnet, dass** die Sperreinheit eine Zeit zum Starten der Software in Schritt C) registriert, so dass die Einnahmedauer der entsprechenden Benutzerposition geprüft und beschränkt werden kann.

9. Verfahren nach Anspruch 8, **dadurch gekennzeichnet, dass** die Sperreinheit der Workstation einen temporären Identitätscode zuweist, der in der Sperreinheit zusammen mit der aktuellen Startzeit gespeichert wird, um verfolgen zu können, welche Workstations aktiv sind und so eine Benutzerposition in einer Lizenzeinheit belegen, wobei die Sperreinheit auch den temporären Identitätscode der Workstation an die Software sendet.

10. Verfahren nach Anspruch 9, **dadurch gekennzeichnet, dass** die Software so eingerichtet ist, dass sie ihre belegte Benutzerposition regelmäßig aktualisiert, indem sie eine Aktualisierungsnachricht nach einem vorgegebenen Zeitintervall an die Sperreinheit sendet, die ihren zugewiesenen temporären Identitätscode umfasst.

11. Verfahren nach einem der Ansprüche 1 - 10, **dadurch gekennzeichnet, dass** eine Lizenzeinheit, die mit der Software zusammenhängt, ausgewählt wird, die wenigstens eine freie Benutzerposition hat, mindestens ein Signier-Code MAC auf Basis wenigstens eines der Software bekannten Parameters erzeugt wird, und von der Sperreinheit zu der Software gesendet wird, die Software lokal einen/mehrere entsprechende/n Signier-Code/s erzeugt, der/die mit empfangenen signierten Codes verglichen wird/werden, wobei die Software gestartet wird, wenn die empfangenen und die lokal erzeugten Signier-Codes miteinander übereinstimmen, oder beendet wird, wenn die empfangenen und die lokal erzeugten Signier-Codes nicht miteinander übereinstimmen.

12. Verfahren nach Anspruch 11, **dadurch gekennzeichnet, dass** die Lizenzeinheit durch die Software aus einer Liste 1' ausgewählt wird, die von der Sperreinheit erzeugt und gesendet wird und einzigartige Identitätscodes für alle Lizenzeinheiten die mit der Sperreinheit verbunden sind, sowie für jede Lizenzeinheit Informationen darüber umfasst, wie viele Benutzer aktuell aktiv sind und so eine Benutzerposition in der Lizenzeinheit belegen.

13. Verfahren nach Anspruch 11 oder 12, **dadurch gekennzeichnet, dass** der/die Signier-Code/s MAC zusammen mit einem Sitzungs-Code SID, der der Kommunikation der Software zugewiesen ist, einem erzeugten Zeitstempel TM, der die Uhrzeit anzeigt, zu der die Kommunikation der Software stattgefunden hat und einer aktuellen Anzahl aktiver Benutzer AA zu der Software gesendet wird/werden.

14. Verfahren nach Anspruch 13, **dadurch gekennzeichnet, dass** der/die Signier-Code/s MAC auf der Basis wenigstens eines der folgenden Parameter erzeugt wird/werden:
eines lesbaren Identitätscodes AID der ausgewählten Lizenzeinheit, eines verborgenen Identitätscodes DAID der Lizenzeinheit, eines lesbaren Identitätscodes LID der Sperreinheit, eines verborgenen Identitätscodes DLID der Sperreinheit, eines Funktions-Codes PLID der Funktion der Sperreinheit, einer Zufallszahl st₁, die durch die Software erzeugt und gesendet wird, des Sitzungs-Codes SID, des Zeitstempels TM und der aktuellen Anzahl von Benutzern AA.

15. Verfahren nach Anspruch 14, **dadurch gekennzeichnet, dass** die Beziehung zwischen dem AID-Code und dem DAID-Code im Voraus in der Software bestimmt wird, so dass der DAID-Code aus dem AID-Code hergeleitet werden kann, und dass die Beziehung zwischen dem LID-Code und dem DLID-Code im Voraus in der Software bestimmt wird, so dass der DLID-Code aus dem LID-Code hergeleitet werden kann.

16. Verfahren nach Anspruch 14 oder 15, **dadurch gekennzeichnet, dass** der/die Signier-Code/s MAC einen ersten Signier-Code MAC₁ und einen zweiten Signier-Code MAC₂ umfasst/umfassen, wobei:
MAC₁ wenigstens auf st₁, SID, AID, AA, TM, LID, DLID oder PLID basiert und
MAC₂ wenigstens auf st₁, SID, TM, AA, AID oder DAID basiert.

17. Verfahren nach Anspruch 16, **dadurch gekennzeichnet, dass** die Software so eingerichtet ist, dass sie regelmäßig ihre belegte Benutzerposition aktualisiert, indem sie nach einem vorgegebenen Zeitintervall T eine Aktualisierungsnachricht zu der Sperreinheit sendet, die ihren zugewiesenen Sitzungs-Code SID und eine neue erzeugte Zufallszahl st₂ umfasst, so dass die Sperreinheit die Workstation, die die Software benutzt, die benutzte Lizenzeinheit und den zuletzt gespeicherten Zeitstempel TM identifizieren kann und feststellen kann, ob eine weitere Benutzung gestattet werden sollte.

18. Verfahren nach Anspruch 17, **dadurch gekennzeichnet, dass** ein neuer Zeitstempel TM' entsprechend dem aktuellen Zeitpunkt erzeugt wird und dass ein dritter Signier-Code MAC₃ erzeugt und von der Sperreinheit zu der Software gesendet wird, wobei MAC₃ wenigstens auf st₂, SID, TM, TM', AID oder DAID basiert.

19. Anordnung zum Beschränken der Anzahl gleichzeitiger Benutzer einer Software (106), die durch eine Lizenzvereinbarung geschützt ist, wobei die Software (106) durch eine Vielzahl mit einem Netzwerk verbundener Workstations (102) aktiviert werden kann, **gekennzeichnet durch**:
- eine mit dem Netzwerk verbundene zentrale Sperreinheit (108), mit der eine wählbare Anzahl physikalischer Lizenzeinheiten (110) verbunden werden kann, wobei jede Lizenzeinheit (110) eine beschränkte Anzahl von Benutzerpositionen hat, mit einem einzigartigen Identitätscode versehen ist und mit wenigstens einer Lizenzvereinbarung zusammenhängt,
- eine Software (106), die so eingerichtet ist, dass sie eine Start-Anforderung an die Sperreinheit (108) sendet, wenn die Software **durch** eine Workstation (102) aktiviert wird,
- eine Einrichtung, die ermittelt, ob eine Lizenzeinheit (110), die mit der Sperreinheit (108) verbunden ist und der Software entspricht, eine freie Benutzerposition hat,
- eine Einrichtung, die die Software (106) zur Benutzung in der Workstation startet, wenn eine freie Benutzerposition vorhanden ist, und
- eine Einrichtung, die die Software (106) beendet, wenn keine freie Benutzerposition vorhanden ist.

20. Anordnung nach Anspruch 19, **dadurch gekennzeichnet, dass** die Sperreinheit so eingerichtet ist, dass sie Informationen darüber, welche Lizenzeinheiten verbunden sind, sowie über die Anzahl entsprechender Benutzerpositionen führt, die aktuell in jeder Lizenzeinheit belegt sind.

## Revendications

1. Procédé de limitation du nombre d'utilisateurs simultanés d'un logiciel (106) protégé par un contrat de licence, dans lequel le logiciel (106) peut être activé par une pluralité de postes de travail (102) reliés en réseau, **caractérisé en ce qu'**il comprend les étapes suivantes consistant à :
A) envoyer une demande de démarrage depuis le logiciel à une unité de verrouillage centrale reliée en réseau (108) quand le logiciel est activé par un poste de travail, dans lequel au moins une unité de licence physique (110), associée au logiciel protégé (106) et contenant un code d'identité unique lisible, est connectée à l'unité de verrouillage (108) et a un nombre limité de positions d'utilisateur qui peuvent être occupées par des utilisateurs du logiciel (106) ;
B) vérifier si une unité de licence (110), connectée à l'unité de verrouillage (108) et associée au logiciel (106), a une position d'utilisateur libre ;
C) démarrer le logiciel (106) pour qu'il soit utilisé sur ledit poste de travail (102) si une position d'utilisateur libre est trouvée à l'étape B) ; et
D) arrêter le logiciel (106) si aucune position d'utilisateur libre n'est trouvée à l'étape B).

2. Procédé selon la revendication 1, **caractérisé en ce que** l'étape B) comprend les sous-étapes suivantes consistant à :
E) lire le code d'identité unique sur chacune des unités de licence étant connectées à l'unité de verrouillage ;
F) identifier au moins une unité de licence qui correspond au logiciel ; et
G) vérifier si une unité de licence identifiée à l'étape F) a une position d'utilisateur libre.

3. Procédé selon la revendication 2, **caractérisé en ce qu'**une liste de codes d'identité lus à l'étape E) est envoyée depuis l'unité de verrouillage au logiciel, une nouvelle liste est créée et envoyée à l'unité de verrouillage comprenant les codes d'identité des unités de licence identifiées à l'étape F) en même temps qu'un nombre max. précisant un nombre maximal d'utilisateurs autorisés pour chaque unité de licence identifiée, et l'unité de verrouillage compare chaque nombre max. au nombre de positions d'utilisateur présentement occupées pour l'unité de licence correspondante.

4. Procédé selon la revendication 3, **caractérisé en ce que** l'unité de verrouillage gère des informations précisant quelles unités de licence sont connectées et précisant le nombre de positions d'utilisateur correspondantes présentement occupées dans chaque unité de licence.

5. Procédé selon l'une quelconque des revendications 1 à 4, **caractérisé en ce que** le logiciel génère un nombre aléatoire ou similaire qui est envoyé à l'unité de verrouillage, dans lequel l'unité de verrouillage renvoie ce nombre aléatoire au logiciel pour indiquer qu'une position d'utilisateur libre est trouvée à l'étape B), de telle façon que le logiciel peut être démarré à l'étape C).

6. Procédé selon la revendication 5, **caractérisé en ce qu'**une clé de chiffrement publique est envoyée depuis l'unité de verrouillage au logiciel, le nombre aléatoire est chiffré avec une clé de session générée par le logiciel, la clé de session est chiffrée avec la clé publique, et le nombre aléatoire et la clé de session sont envoyés sous forme de message chiffré depuis le logiciel à l'unité de verrouillage, de telle façon que l'unité de verrouillage peut déchiffrer la clé de session avec une clé privée correspondant à la clé publique, et ensuite le nombre aléatoire avec la clé de session.

7. Procédé selon l'une quelconque des revendications 1 à 6, **caractérisé en ce que**, si aucune position d'utilisateur libre n'est trouvée à l'étape B), l'unité de verrouillage envoie un nombre aléatoire erroné au logiciel pour indiquer ce fait, de telle façon que le logiciel est arrêté à l'étape D).

8. Procédé selon l'une quelconque des revendications 1 à 7, **caractérisé en ce que** l'unité de verrouillage enregistre une heure correspondant au démarrage du logiciel à l'étape C), de telle façon que la durée d'occupation de la position d'utilisateur correspondante peut être vérifiée et limitée.

9. Procédé selon la revendication 8, **caractérisé en ce que** l'unité de verrouillage affecte au poste de travail un code d'identité temporaire qui est enregistré dans l'unité de verrouillage en même temps que l'heure courante du démarrage, afin de surveiller quels postes de travail sont actifs et occupent de ce fait une position d'utilisateur dans une unité de licence, dans lequel l'unité de verrouillage transmet aussi au logiciel le code d'identité temporaire du poste de travail.

10. Procédé selon la revendication 9, **caractérisé en ce que** le logiciel est adapté pour renouveler régulièrement sa position d'utilisateur prise, en envoyant un message de renouvellement à l'unité de verrouillage après un intervalle de temps T prédéterminé, comprenant le code d'identité temporaire qui lui a été affecté.

11. Procédé selon l'une quelconque des revendications 1 à 10, **caractérisé en ce qu'**une unité de licence associée au logiciel est sélectionnée, ayant au moins une position d'utilisateur libre, au moins un code de signature MAC est créé sur base d'au moins un paramètre connu par le logiciel et envoyé depuis l'unité de verrouillage au logiciel, le logiciel crée un ou des codes de signature correspondants au niveau local, qui sont comparés avec un ou des codes de signature reçus, dans lequel le logiciel est démarré si les codes de signature reçus et ceux créés au niveau local coïncident entre eux, ou arrêté si les codes de signature reçus et ceux créés au niveau local ne coïncident pas entre eux .

12. Procédé selon la revendication 11, **caractérisé en ce que** l'unité de licence est sélectionnée par le logiciel à partir d'une liste l'₁, générée et envoyée par l'unité de verrouillage L, comprenant des codes d'identité uniques pour toutes les unités de licence étant connectées à l'unité de verrouillage, et des informations, pour chaque unité de licence, précisant le nombre d'utilisateurs présentement actifs et occupant de ce fait une position d'utilisateur dans l'unité de licence.

13. Procédé selon la revendication 11 ou 12, **caractérisé en ce que** le ou lesdits codes de signature MAC sont envoyés au logiciel en même temps qu'un code de session SID affecté à la communication avec le logiciel, une estampille temporelle créée TM identifiant l'heure d'horloge à laquelle la communication avec le logiciel a eu lieu, et un nombre présent d'utilisateurs actifs AA.

14. Procédé selon la revendication 13, **caractérisé en ce que** le ou lesdits codes de signature MAC sont créés sur base d'au moins un des paramètres suivants : un code d'identité lisible AID de l'unité de licence sélectionnée, un code d'identité caché DAID de l'unité de licence, un code d'identité lisible LID de l'unité de verrouillage, un code d'identité caché DLID de l'unité de verrouillage, un code fonctionnel PLID de la fonction de l'unité de verrouillage, un nombre aléatoire st₁ généré et envoyé par le logiciel, le code de session SID, l'estampille temporelle TM et le nombre présent d'utilisateurs AA.

15. Procédé selon la revendication 14, **caractérisé en ce que** la relation entre le code AID et le code DAID est déterminée à l'avance dans le logiciel de telle façon que le code DAID peut être dérivé du code AID, et **en ce que** la relation entre le code LID et le code DLID est déterminée à l'avance dans le logiciel de telle façon que le code DLID peut être dérivé du code LID.

16. Procédé selon la revendication 14 ou 15, **caractérisé en ce que** le ou lesdits codes de signature MAC comprennent un premier code de signature MAC₁ et un second code de signature MAC₂, dans lequel : MAC₁ est basé sur au moins un paramètre parmi st₁, SID, AID, AA, TM, LID, DLID et PLID ; et MAC₂ est basé sur au moins un paramètre parmi st₁, SID, TM, AA, AID et DAID.

17. Procédé selon la revendication 16, **caractérisé en ce que** le logiciel est adapté pour renouveler fréquemment sa position d'utilisateur prise en envoyant un message de renouvellement après un intervalle de temps T prédéterminé à l'unité de verrouillage, comprenant le code de session SID qui lui a été affecté et un nouveau nombre aléatoire généré st₂, de telle façon que l'unité de verrouillage peut identifier le poste de travail utilisant le logiciel, l'unité de licence utilisée et l'estampille temporelle TM enregistrée en dernier lieu, et déterminer si une prolongation de l'utilisation peut être autorisée.

18. Procédé selon la revendication 17, **caractérisé en ce qu'**une nouvelle estampille temporelle TM' est créée qui correspond à l'instant présent et **en ce qu'**un troisième code de signature MAC₃ est créé et envoyé au logiciel depuis l'unité de verrouillage, où MAC₃ est basé sur au moins un paramètre parmi st₂, SID, TM, TM', AID et DAID.

19. Dispositif de limitation du nombre d'utilisateurs simultanés d'un logiciel (106) protégé par un contrat de licence, dans lequel le logiciel (106) peut être activé par une pluralité de postes de travail (102) reliés en réseau, **caractérisé en ce qu'**il comprend :
- une unité de verrouillage centrale (108) reliée en réseau à laquelle un nombre variable d'unités de licence physiques (110) peuvent être connectées, dans lequel chaque unité de licence (110) a un nombre limité de positions d'utilisateur, est dotée d'un code d'identité unique et est associée à au moins un contrat de licence,
- un logiciel (106) adapté pour envoyer une demande de démarrage à l'unité de verrouillage (108) quand le logiciel est activé par un poste de travail (102),
- des moyens pour vérifier si une unité de licence (110), connectée à l'unité de verrouillage (108) et correspondant au logiciel, a une position d'utilisateur libre,
- des moyens pour démarrer le logiciel (106) pour qu'il soit utilisé sur ledit poste de travail s'il y a une position d'utilisateur libre, et
- des moyens pour arrêter le logiciel (106) s'il n'y a pas de position d'utilisateur libre.

20. Dispositif selon la revendication 19, **caractérisé en ce que** l'unité de verrouillage est adaptée pour gérer des informations précisant quelles unités de licence sont connectées et précisant le nombre de positions d'utilisateur correspondantes présentement occupées dans chaque unité de licence.
